# EUROPÄISCHE PATENTSCHRIFT

(11) **EP 2 204 257 B1**
(45) Veröffentlichungstag und Bekanntmachung des Hinweises auf die Patenterteilung: **11.07.2018**
(21) Anmeldenummer: 10003406.5
(22) Anmeldetag: 30.04.2007
(51) Int. Cl.: F16C 11/04, B23P 11/00, B23P 19/04, B21K 25/00, F16C 33/08, F16C 43/02, F16C 17/10, F16B 19/06, F16B 5/04, E05D 9/00, E05D 5/16

(54) **Verfahren zum Herstellen eines Gelenks, Gelenk sowie Gelenkbolzen**
Method for manufacturing a joint, joint and joint pin
Procédé de fabrication d'une articulation, articulation ansi qu'un axe d'articulation

(30) Priorität: 20.10.2006 DE 102006050463; 06.07.2006 DE 102006031616; 02.05.2006 DE 102006020601
(43) Veröffentlichungstag der Anmeldung: 07.07.2010
(62) Teilanmeldung aus: 07008744.0
(73) Patentinhaber: Schmidt, Heiko, 93138 Lappersdorf (DE)
(72) Erfinder: Schmidt, Heiko, 93138 Lappersdorf (DE)
(74) Vertreter: Glück Kritzenberger Patentanwälte PartGmbB

(56) Entgegenhaltungen:
- EP-A- 1 793 134
- EP-A1- 1 214 527
- EP-A1- 1 378 673
- WO-A-01/21916
- GB-A- 2 094 880
- US-A- 3 588 990

## Beschreibung

Die Erfindung bezieht sich auf ein Verfahren gemäß Oberbegriff Patentanspruch 1, auf eine Gelenkverbindung oder Gelenk gemäß Oberbegriff Patentanspruch 8 sowie auf einen Gelenkbolzen gemäß Oberbegriff Patentanspruch 12.

Gelenke zwischen zwei Bauteilen oder Werkstücken sind bekannt (EP 1 793 134 A1) und werden sehr umfangreich in den verschiedensten Bereichen der Technik benötigt, u.a. auch im Automobilbau z.B. in so genannten Gestängen beispielsweise zwischen der Fahrzeugkarosserie und einem beweglichen Karosserieelement, beispielsweise zwischen der Fahrzeugkarosserie und einer Motorhaube oder einem Kofferraumdeckel. Aber auch in anderen Bereichen der Technik werden derartige Gelenke benötigt, die in der Regel aus einer in einem Bauteil verdrehungssicher gehaltenen Gelenkbuchse und aus einem Gelenkbolzen bestehen, der mit einem Buchsenabschnitt drehbar bzw. schwenkbar in der Gelenkbuchse gelagert ist, mit einem Bolzenkopf gegen axiales Verschieben am ersten Bauteil oder an einem flanschförmigen Abschnitt der Lager- oder Gelenkbuchse anliegend gesichert ist und in dem zweiten Bauteil in geeigneter Weise, beispielsweise durch Vernieten befestigt ist. Ein weiteres Beispiel für eine Gelenkverbindung gibt die GB 2 094 880 A an, bei dem zwei Bauteile mittels einem in einer Buchse gelagerten Niet verbunden werden.

Beispielsweise ist aus der EP 1 214 527 A1 ein Verfahren zum Herstellen einer Gelenkverbindung bekannt, bei dem in einer Lageröffnung eines Bauteils eine Bundlagerbuchse mit einem Gelenkbolzen vorgesehen ist. Der Gelenkbolzen weist einen durchmesserweiteren und einen durchmesserkleineren Abschnitt auf. Mittels einer Deformierung des durchmesserkleineren Abschnittes wird der Gelenkbolzen unverlierbar in der Lageröffnung gehalten wobei gleichzeitig ein ringscheibenförmiges Axiallagerelement eingebördelt wird.

Aufgabe der Erfindung ist es, ein Verfahren aufzuzeigen, mit dem eine vereinfachte und besonders rationelle Herstellung solcher Gelenke oder Gelenkverbindungen möglich ist. Zur Lösung dieser Aufgabe ist ein Verfahren entsprechend dem Patentanspruch 1 ausgebildet. Ein Gelenk oder eine Gelenkverbindung sind Gegenstand des Patentanspruchs 8. Ein Gelenkbolzen zur Verwendung bei einer solchen Gelenkverbindung ist Gegenstand des Patentanspruchs 12.

Nach einem Aspekt der Erfindung wird der jeweilige Gelenkbolzen nach dem Einsetzen in die Gelenkbuchse an dieser bzw. an dem einen Bauteil gegen Herausfallen gesichert, und zwar derart, dass die Drehbewegung des Gelenkbolzens in der Gelenkbuchse hierdurch nicht beeinträchtigt ist. Dieses Sichern erfolgt dann durch plastisches Verformen oder Verstemmen wenigstens eines Bereichs des jeweiligen Gelenkbolzens, beispielsweise in der Form, dass hierdurch ein radial über den Umfang des Gelenkbolzens weg stehender und diesen in der Gelenkbuchse gegen herausfallen sichernder Abschnitt gebildet wird. Das Sichern des jeweiligen Gelenkbolzens ist sowohl bei einem Verfahren möglich, bei dem das Einbringen der Gelenkbuchse unter bzw. in der Presse erfolgt, als auch an Arbeitsplätzen außerhalb einer Presse.

Bevorzugt kann das Einbringen und/oder das Kalibrieren und/oder das zumindest teilweise Fixieren der jeweiligen Gelenkbuchse durch Umlegen eines Buchsenrandes nicht durch eine weggesteuerte Bewegung der hierfür verwendeten Werkzeuge, sondern kraftgesteuert oder unter Verwendung von wenigstens einem schwimmend und/oder federnd gelagerten Werkzeug, also auf keinen Fall weggesteuert, um so Beschädigungen und/oder Deformationen der Gelenkbuchsen zu vermeiden. Hiermit wird dem Umstand Rechnung getragen, dass es sich bei den Gelenkbuchsen relativ leicht deformierbare Bauteile handelt und um dementsprechend eine unerwünschte Deformation und/oder Beschädigung dieser Gelenkbuchsen zu vermeiden. Die Verwendung zumindest eines schwimmend und/oder federnd gelagerten Werkzeugs zum Kalibrieren und/oder zumindest vorläufigen Fixieren der Gelenkbuchsen hat insbesondere beim Durchführen des Verfahrens unter oder in einer Presse Vorteile, eignet sich aber auch für Verfahren, die außerhalb einer Presse durchgeführt werden.

Unter "Presse" ist im Sinne der Erfindung generell eine Vorrichtung zu verstehen, mit der üblicherweise die Fertigung von Bauteilen oder Werkstücken aus einem in der Regel metallischen Flachmaterial, z.B. aus Stahlblech durch Stanzen und/oder Formen erfolgt und die hierfür wenigstens zwei Werkzeugträger aufweist, von denen zumindest einer durch den Pressenantrieb relativ zu dem anderen Werkzeugträger weggesteuert zum Schließen und Öffnen der Presse bzw. des in dieser verwendeten Fertigungswerkzeugs, beispielsweise Folgewerkzeugs oder Stufenwerkzeug bewegt wird.

Folgewerkzeug im Sinne der Erfindung bedeutet das in einer Presse verwendete Fertigungswerkzeug zum Fertigen des jeweiligen Bauteils oder Werkstücks und/oder zum Einbringen von Komponenten in das Bauteil bzw. Werkstück in mehreren Arbeitsschritten und an mehreren Arbeitspositionen, wobei die Bauteile über Materialabschnitte mit einander verbunden durch das Werkzeug bzw. die Arbeitsstationen bewegt werden.

Stufenwerkzeug im Sinne der Erfindung bedeutet ein in einer Presse verwendetes Werkzeug, in welchem wiederum in mehreren Arbeitsschritten oder Stufen die Fertigung des jeweiligen Bauteils oder Werkstücks und/oder das Einbringen von Komponenten in das Bauteil bzw. Werkstück erfolgen, die einzelnen Bauteile oder Werkstücke aber nicht miteinander verbunden sind und durch eine beispielsweise von Transferbalken gebildete Förderreinrichtung durch das Werkzeug bzw. die einzelnen Arbeitspositionen oder -stufen bewegt werden.

Weiterbildungen der Erfindung ergeben sich aus den abhängigen Ansprüchen. Bevorzugt erfolgt das Sichern durch plastische Verformung wenigstens eines Vorsprungs des Gelenkbolzens.
Beispielsweise wird die jeweilige Gelenkbuchse mit dem in dieser Buchse vormontierten Gelenkbolzen in das eine Bauteil eingesetzt.
Auch können die Buchsen und die Gelenkbolzen jeweils eigenständig bereitgestellt und vor dem Montieren am ersten Bauteil zusammengeführt werden, und zwar bevorzugt außerhalb der Presse oder des für die Herstellung des einen Bauteils verwendeten Werkzeugs.

In Weiterbildung der Erfindung besteht auch die Möglichkeit den Gelenkbolzen so auszubilden, dass am Übergang zwischen zwei aneinander anschließenden Bolzenabschnitten mit unterschiedlichem Durchmesser wenigstens ein Vorsprung gebildet ist, der von dem Bolzenabschnitt mit dem größeren Durchmesser in Richtung der Bolzenachse wegsteht.
Beispielsweise kann der wenigstens eine Vorsprung an einem bezogen auf die Bolzenachse radial außen liegenden Randbereich des Übergangs zwischen den beiden Bolzenabschnitten vorgesehen sein.
Der Gelenkbolzen ist vorzugsweise aus Metall, beispielsweise Stahl hergestellt.

Die Erfindung wird im Folgenden anhand der Figuren an Ausführungsbeispielen näher erläutert. Es zeigen:
- Fig. 1: in vereinfachter Darstellung ein zwischen zwei Bauteilen gebildetes Gelenk im Wesentlichen bestehend aus einer Gelenkbuchse und einem Bolzen;
- Fig. 2: in vereinfachter Darstellung das nach dem Fügen der Gelenkbuchse und dem Lagerbolzen erhaltene Zwischenprodukt;
- Fig. 3: der Gelenkbolzen in Einzeldarstellung;
- Fig. 4: in schematischer Darstellung den Verfahrensablauf bei der Herstellung des Gelenks der Figur 1 in einem Fügewerkzeug;
- Fig. 5: und 6 verschiedenen Darstellungen eines Setzkopfes zum Einbringen oder Fügen der Gelenkbuchsen;
- Fig. 7: in schematischer Darstellung ein Kalibrier- und Umlegewerkzeug;
- Fig. 8: in schematischer Darstellung den Funktionsablauf bei einer weiteren möglichen Ausführungsform;
- Fig. 9: in einer schematischen Darstellung einen Schnitt durch eines der Bauteile im Bereich der Gleitlager- oder Gelenkbuchse vor dem Kalibrieren der Blech- oder Bauteildicke und nach dem Kalibrieren der Bauteil- oder Blechdicke;
- Fig. 10: in Positionen a) - d) nochmals im Detail die verschiedenen Verfahrensschritte zum Kalibrieren und Fixieren der Gleitlager- oder Gelenkbuchse sowie zum Einsetzen und Sichern des Gelenkbolzens;
- Fig. 11: in vereinfachter Darstellung und in Positionen a) - c) verschiedene Profile für ein Gegenwerkzeug;
- Fig. 12: eine ähnliche Darstellung wie Figur 10, jedoch bei einer weiteren Ausführungsform des Verfahrens.

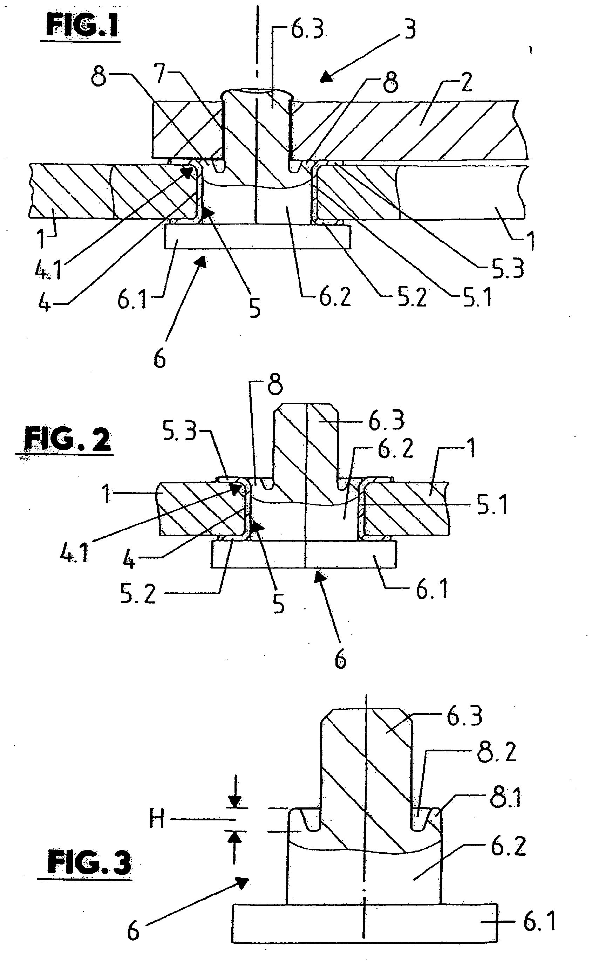

In der Figur 1 sind 1 und 2 zwei aus Metall, beispielsweise Stahlblech durch Stanzen und Biegen gefertigte Werkstücke oder Bauteile, die über ein Gelenk 3 miteinander verbunden sind und von denen das Bauteil 1 beispielsweise durch Stanzen aus einem metallischen Flachmaterial, beispielsweise aus Stahlblech hergestellt ist, und zwar in einem in einer Presse angeordneten Folge- oder Stufenwerkzeug. Das Bauteil 2 ist beispielsweise ein Element eines Gestänges, welches über das Gelenk 3 gelenkig mit dem Bauteil 1 verbunden ist.
Das Gelenk 3 besteht aus einer in eine Öffnung 4 des Bauteils 1 eingesetzten Gleitlager- oder Gelenkbuchse 5, die aus einem dünnen, für Gelenkbuchsen geeigneten Metall, beispielsweise aus Stahl mit einem hülsenartigen Buchsenkörper 5.1 und einem überstehenden Flansch 5.2. Die Buchse 5 ist in die Öffnung 4 derart eingesetzt, dass sie mit dem Flansch 5.2 an einer dem Bauteil 2 abgewandten Oberflächenseite des Bauteils 1 am Rand der Öffnung 4 anliegt und mit dem buchsenförmigen Abschnitt 5 in der Öffnung 4 aufgenommen ist. Zur Sicherung der Buchse 5 ist der hülsenförmige Abschnitt 5.1 an der dem flanschförmigen Abschnitt 5.2 abgewandten Ende am dortigen mit einer Fase 4.1 versehenen Rand der Öffnung 4 umgelegt, so dass die Buchse 5 einen Rand 5.3 bildet, die die seitliche Lager- und Gleitfläche für das Bauteil 2 bildet.
Das Gelenk 3 besteht weiterhin aus dem Gelenkbolzen 6, der einem Bolzenkopf 6.1 und an diesen anschließend einen Bolzenabschnitt 6.2 mit größerem Durchmesser und daran anschließend einen Bolzenabschnitt 6.3 mit reduziertem Durchmesser aufweist. Mit dem Bolzenabschnitt 6.2 ist der Gelenkbolzen 6 in der Buchse 5 aufgenommen, und zwar derart, dass der Bolzenkopf 6.1 gegen den flanschförmigen Abschnitt 5.2 anliegt. Mit dem Abschnitt 6.3 greift der Gelenkbolzen 6 in eine Öffnung 7 des Bauteils 2 ein und ist dort durch vernieten, beispielsweise in einem Taumel-Niet-Verfahren verankert.
Die Herstellung der Bauteile 1 erfolgt, wie ausgeführt, in einem in einer Arbeitsvorrichtung, beispielsweise Presse vorgesehenen Folge- oder Stufenwerkzeug, in welchem in mehreren Arbeitsschritten die Bauteile 1 beispielsweise durch Stanzen und Formen erzeugt und hierbei u.a. auch die Öffnung 4 in das jeweilige Bauteil 1 eingebracht wird. In diesem Folge- oder Stufenwerkzeug erfolgt auch das Einbringen der Buchsen 5, das Umlegen des jeweiligen Buchsenrandes 5.3, das Kalibrieren der Buchsen 5 mit einem geeigneten Kalibrier-Werkzeug oder Dorn zur Sicherstellung eines exakten Innendurchmessers der Buchsen 5, das Einsetzen des jeweiligen Gelenkbolzens 6 in eine in einem Bauteil 1 eingebrachte Buchse 5 und ein Sichern des Gelenkbolzens 6 in der jeweiligen Buchse 5, und zwar derart, dass der Gelenkbolzen 6 zwar drehbar in der jeweiligen Buchse 5 aufgenommen, gegen Herausfallen aus der Buchse 5 aber gesichert ist.
Die Figur 2 zeigt den nach diesen Verfahrensschritten erreichten Zustand, wobei das Sichern des jeweiligen Gelenkbolzens 6 bei dieser Ausführungsform durch eine geringfügige plastische Verformung (Verstemmen) des Materials des Gelenkbolzens im Bereich der Stufe zwischen den Bolzenabschnitten 6.2 und 6.3 erreicht ist, sodass der Bolzen an dieser Stufe einen leicht über den Umfang des Bolzenabschnittes 6.2 weg stehenden ringförmigen Abschnitt 8 bildet, der allerdings in der von der Fase 4.1 gebildeten Erweiterung der Buchse 5 aufgenommen ist. Bei dieser Ausführungsform liegt die dem Bolzenabschnitt 6.3 zugewandte Stirn- oder Ringfläche des Abschnitts 8 in einer Ebene mit der dem Bauteil 1 abgewandten Fläche des Buchsenrandes 5.3. Zur Bildung des Abschnitts 8 ist der Gelenkbolzen 6 entsprechend der Figur 3 beispielsweise am äußeren Rand der zwischen den Bolzenabschnitten 6.2 und 6.3, gebildeten Stufe mit einem ringförmigen Vorsprung 8.1 versehen. Der ringförmige Vorsprung 8.1 ist bei dieser Ausführungsform dadurch geformt, dass in die den Übergang zwischen den Bolzenabschnitten 6.2 und 6.3 bildende und in der Ebene senkrecht zur Bolzenlängsachse angeordnete Ringfläche eine den Bolzenabschnitt 6.3 unmittelbar umschließende ringförmige Nut 8.2 eingeformt ist.

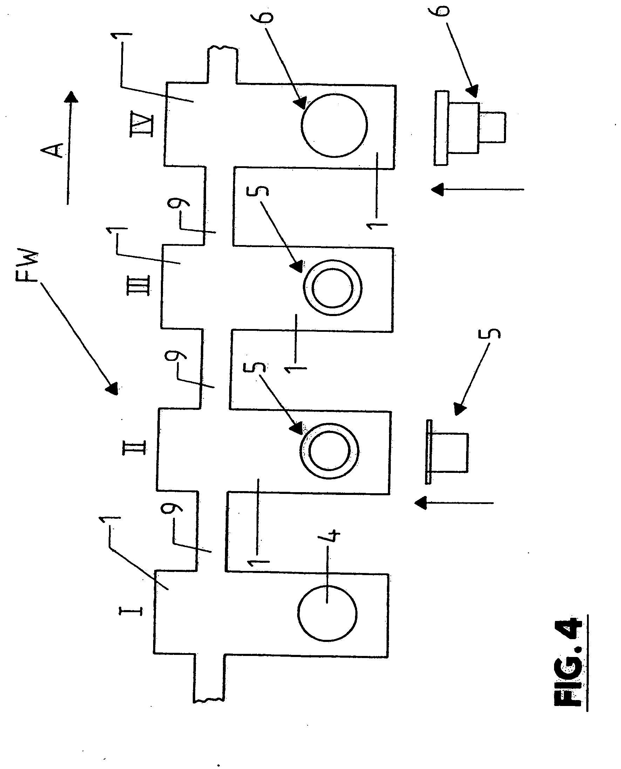

Die Figur 4 zeigt in schematischer Darstellung nochmals den vorstehend beschriebenen Verfahrensablauf, bei dem die einzelnen, beispielsweise aus einem Stahlblech durch Biegen und Stanzen hergestellten Bauteile 1 in Richtung des Pfeils A und im Takt der Arbeitsmaschine bzw. der Presse durch die einzelnen Abschnitte des Folge- oder Stufenwerkzeugs bewegt werden. Im Werkzeugabschnitt I oder aber in mehreren Werkzeugabschnitten erfolgt die Herstellung der Bauteile 1 und die Vorlochung dieser Bauteile mit den Öffnungen 4. In dem Werkzeugabschnitt II erfolgt das Einsetzen der Buchsen in die jeweilige Öffnung 4 eines Bauteils 1. In dem Werkzeugabschnitt III erfolgt dann das Umlegen des Randes 5.3 sowie auch das Kalibrieren der jeweiligen Buchse 5. In dem Werkzeugabschnitt IV erfolgt dann schließlich das Fügen und das Sichern des jeweiligen Gelenkbolzens 6. Die Bauteile 1 sind bei ihrer Bewegung durch das Folge- oder Stufenwerkzeug bzw. durch die einzelnen Werkzeugabschnitte über Materialstege oder Materialabschnitte miteinander verbunden, wie dies in der Figur 4 schematisch mit 9 angedeutet ist. Erst am Ende der Bearbeitung im Folge- oder Stufenwerkzeug, beispielsweise erst nach dem Fügen und Sichern der Gelenkbolzen 6 werden die Bauteile 1 beispielsweise durch Freistanzen getrennt, sodass sie dann einer weiteren Verwendung zugeführt werden können, und zwar der Montage der Bauteile 2 an den Bolzenabschnitten 6.3. Dies erfolgt beispielsweise an einem Arbeitsplatz außerhalb der Presse oder aber an einem an die Presse bzw. an das Folge- oder Stufenwerkzeug außerhalb der Presse anschließenden Fertigungsautomaten.

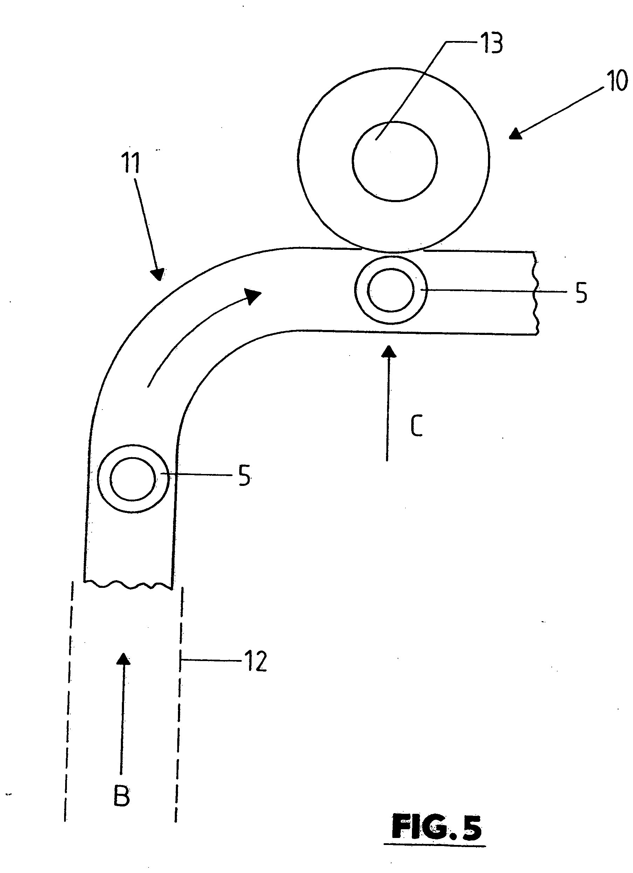

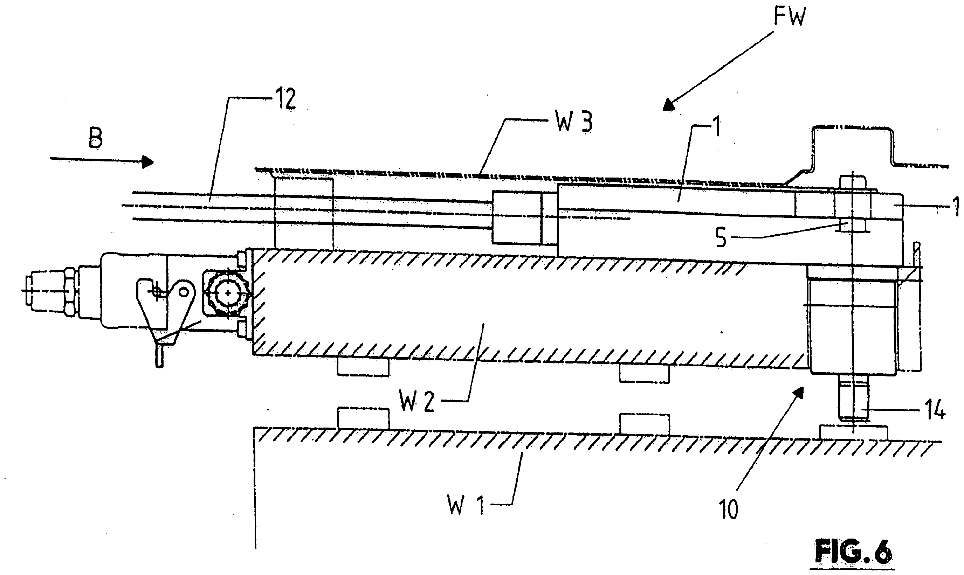

Zum Fügen der Buchsen 5 dient ein Buchsensetzkopf, der in der Figuren 5 und 6 schematisch mit 10 angegeben ist. Diesem Buchsensetzkopf 10, der im Wesentlichen einem dem Fachmann unter der Bezeichnung "Stanzkopf" bekannten Werkzeug entspricht, bzw. einer starren Führung 11 des Buchsensetzkopfes 10 werden die Buchsen 5 von einer außerhalb des Folge- oder Stufenwerkzeugs bzw. der Presse angeordneten Versorgungseinheit über einen Schlauch 12 mit Förderluft zugeführt, und zwar entsprechend dem Pfeil B derart, dass die Buchsen 5 in der starren Führung 11 aneinander anschließend und mit ihren Buchsenachsen senkrecht zur Förderrichtung B orientiert angeordnet sind. In jedem Arbeitshub des Werkzeuges wird die an dem in Förderrichtung B vorderen Ende bereitstehende Buchse 5 aus der Führung 11 heraus in eine Bereitstellungsposition 13 bewegt, wie dies mit dem Pfeil C angedeutet ist. Aus der Bereitstellungsposition 13 wird die Buchse dann mit einem durch die Bewegung des Folge- oder Stufenwerkzeugs bzw. der Presse gesteuerten Stempel oder Plunger 14 axial in die Öffnung 4 des jeweiligen Bauteils 1 eingeschoben.

In der Figur 6 sind auch die gegenläufig bewegten Werkzeugteile W1, W2 und W3 des Folgewerkzeugs FW sowie der am Werkzeugteils W2 vorgesehene Buchsensetzkopf 10 mit dem mit dem Werkzeugteils W1 zusammenwirkenden Plunger 14 und die in das Bauteil 1 eingesetzte Buchse 5 schematisch dargestellt.

Wie die Figur 5 zeigt, weist die starre Führung 11 eine Krümmung von etwa 90° auf, und zwar in einer Ebene senkrecht zur Achsrichtung der einzelnen Buchsen und damit auch senkrecht zur Fügerichtung. Durch diese Ausbildung ist eine optimale Zuführung der Buchsen 5 an das Folge- oder Stufenwerkzeug in einer Achsrichtung quer bzw. senkrecht zur Förderrichtung A möglich.

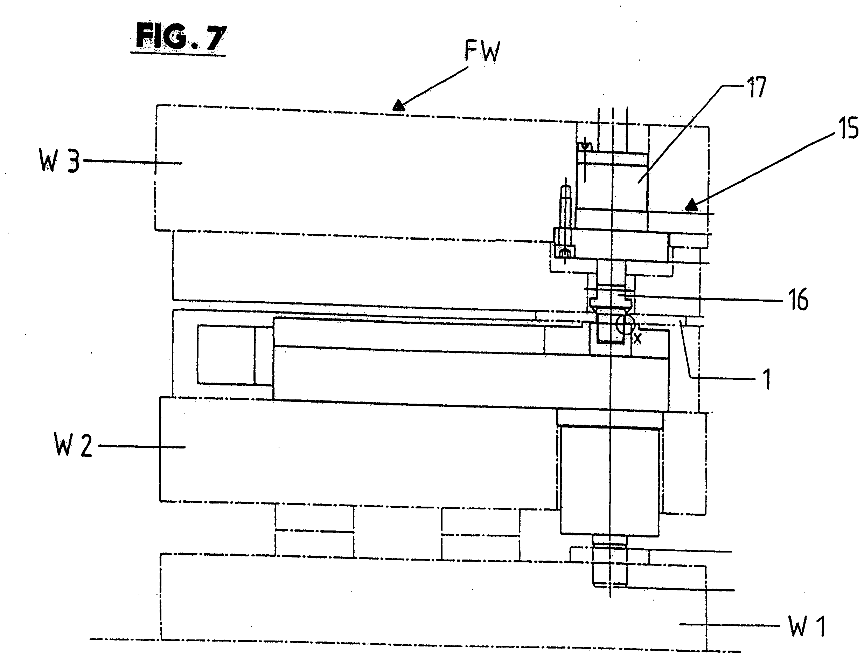

Das Umlegen des Buchsenrandes 5.3 und das Kalibrieren der Buchsen erfolgt in dem in der Figur 7 schematisch dargestellten Kalibrier- und Umlegwerkzeug, welches ebenfalls im Folgewerkzeug FW bzw. an einem der Werkzeugteile des Folgewerkzeugs FW vorgesehen ist und im Wesentlichen aus dem Kalibrier- und Umlegstößel 16 und einem Betätigungselement 17 besteht. Während das Fügen der jeweiligen Buchse 5 beispielsweise von unten her erfolgt, erfolgt das Kalibrieren und Umlegen des Buchsenrandes mit dem Stößel 16 von oben her.

Wie oben ausgeführt, sind die Buchsen 5 dünnwandig ausgebildet und unterliegen daher bereits bei einer relativ geringen Krafteinwirkung einer unerwünschten, beispielsweise die Leichtgängigkeit des jeweiligen Gelenks beeinträchtigenden Verformung. Weiterhin treten im Folgewerkzeug nicht unerhebliche Tolleranzen u.a. hinsichtlich der Positionierung der Bauteile 1 an den Werkzeugabschnitten auf, an denen das Fügen der Buchsen 5 sowie das Kalibrieren und Umlegen des Buchsenrandes 5.3 erfolgt, d.h. am Setzkopf 10 sowie an dem Kalibrier- und Umlegewerkzeug 15. Um beim Fügen sowie auch beim Kalibrieren und Umlegen des Randes 5.3 aufgrund einer nicht völlig exakten Positionierung des jeweiligen Bauteils 1 eine auf die Buchsen ausgeübte und möglicherweise zu einer Deformierung der Buchsen führende Krafteinwirkung zu vermeiden, sind die Bewegungen der entsprechenden Werkzeuge, insbesondere auch des Plungers 14 und des Stößels 16 nicht rein Weg abhängig gesteuert, sondern das jeweilige Werkzeug richtet sich an der tatsächlichen Lage der jeweiligen Öffnung 4 bzw. der in diese eingebrachten Buchse 5 aus. Dies ist beispielsweise dadurch erreicht, dass die entsprechenden Werkzeuge insbesondere senkrecht zur Ebene des jeweiligen Bauteils 1 gefedert ausgebildet und/oder insbesondere in der Ebene des jeweiligen Bauteils 1 schwimmend gelagert oder ausgebildet sind. Hierdurch wird ein Verformen der Buchsen 5 beim Einsetzen in die Öffnungen 4 vermieden. Weiterhin werden eine ordnungsgemäße Kalibrierung sowie insbesondere auch ein gleichmäßiges Umlegen des Buchsenrandes 5.3 sowie eine Fixierung der jeweiligen Buchse 5 in der zugehörigen Öffnung 4 in optimaler Weise erreicht, sodass bei der Betätigung des jeweiligen Gelenkes 3 tatsächlich der Gelenkbolzen 6 in der Buchse 5 und nicht in unerwünschter Weise die Buchse 5 in der Öffnung 4 drehen.

Diese schwimmende Lagerung für die Werkzeuge wird beispielsweise dadurch erreicht, dass der mit der jeweiligen Buchse 5 zusammenwirkende Endabschnitt des Plungers 14 und das mit der jeweiligen Buchse 5 zusammenwirkende Ende des Stößels 16 mit dem restlichen Plunger 14 bzw. Stößel 16 gelenkig verbunden ist. Dieser mit der jeweiligen Buchse 5 unmittelbar zusammenwirkende Teil des Plungers 14 bzw. des Stößels 16 weist dann eine kurze axiale Länge auf, sodass es bei der Verarbeitung der jeweiligen Buchse 5 nicht zu einem Verkippen oder Verkanten des mit der Buchse 5 zusammenwirkenden Werkzeugabschnittes und damit nicht zu einem unerwünschten Verformen der Buchse 5 kommt. Weiterhin besitzt der mit der jeweiligen Buchse zusammenwirkende Werkzeugabschnitt ein geringes Gewicht bzw. eine geringe Masse.

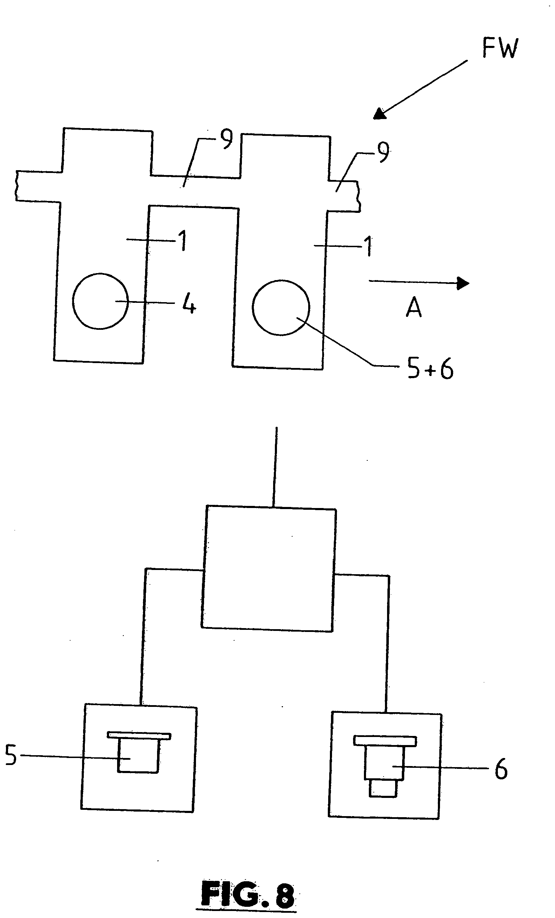

Die Figur 8 zeigt sehr schematisch den Verfahrensablauf bei einer weiteren möglichen Ausführungsform der Erfindung, bei der die jeweilige Buchse 5 mit dem zugehörigen Gelenkbolzen 6 vormontiert in das jeweiligen Bauteil 1 eingesetzt wird. Entsprechend der Darstellung der Figur 8 erfolgt dies so, dass die Buchsen 5 und die Gelenkbolzen 6 jeweils gesondert in einem Vorrat bereitgestellt werden. Während des Verarbeitungsprozesses werden dann außerhalb des Folge- oder Stufenwerkzeuges jeweils eine Buchse 5 und ein Gelenkbolzen 6 zusammengeführt und in dieser Form dem entsprechenden Setzkopf zum Einsetzen der Buchsen/Gelenkbolzen-Kombination in die Öffnung 4 des betreffenden Bauteils 1 zugeführt. Beispielsweise im selben Werkzeugabschnitt des Folgewerkzeugs FW erfolgen das Umlegen des Buchsenrandes 5.3 und das Sichern des Gelenkbolzens 6 durch Verstemmen oder auf andere geeignete Weise.

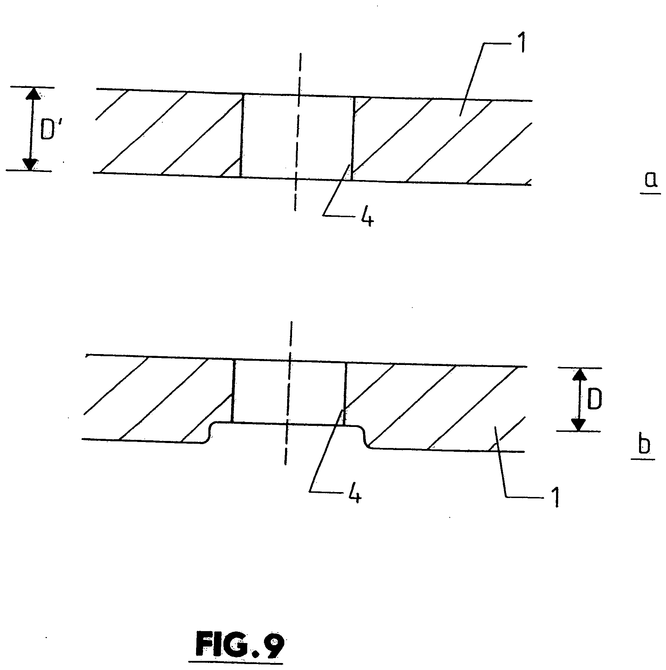

Die Figur 9 zeigt in vereinfachter Darstellung einen Schnitt durch das Bauteil 1 im Bereich der Öffnung 4, und zwar in der Position a nach dem Stanzen des Bauteils 1 und nach dem Einbringen der Öffnungen 4. Vor dem Einsetzen der Buchse 5 erfolgt bei dieser Ausführungsform des Verfahrens zunächst eine Kalibrierung der Dicke des Bauteils 1 durch ein stempelartiges Werkzeug, so dass das Bauteil 1 dann nach dem Kalibrieren zumindest im Bereich der Öffnung 4 bzw. des Gelenks 3 die erforderliche Dicke aufweist. Das Bauteil 1 wird bei diesem Verfahren somit zunächst mit der etwas größeren Dicke D' hergestellt, die dann beim Kalibrieren im Bereich der Öffnung 4 auf die Dicke D reduziert bzw. kalibriert wird. Dieses Kalibrieren erfolgt beispielsweise in einem weiteren Verfahrensschritt an einer zusätzlichen Position zwischen den Positionen I und II der Figur 4. Bei entsprechender Werkzeugausbildung kann dieses Kalibrieren aber auch z.B. in der Position I bei der Herstellung des Bauteils 1 oder in der Position II vor dem Einsetzen der jeweiligen Buchse 5 erfolgen.

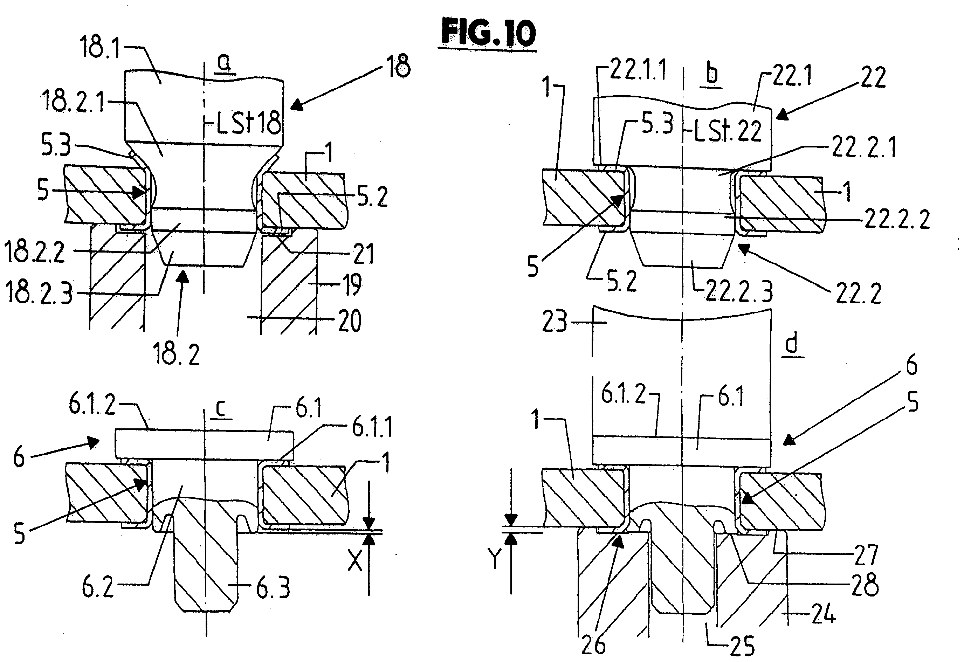

Die Figur 10 zeigt nochmals im Detail die im Zusammenhang mit der Figur 2 bereits allgemein beschriebenen Verfahrensschritte zum Einbringen der Gleitlager- oder Gelenkbuchse 5 in das Bauteil 1, zum Kalibrieren und Fixieren dieser Buchse sowie zum Einsetzen und sichern des Gelenkbolzens 6 in der Buchse. Die Position a) zeigt das Bauteil 1 zusammen mit der bereits in dieses Bauteil bzw. die Öffnung 4 eingesetzten Gelenkbuchse 5 und mit einem Kalibrier- und Umlegstößel 18, von dem die beiden Abschnitte 18.1 und 18.2 gezeigt sind und der mit dem Abschnitt 18.2 für die Kalibrierung der Buchse 5 in diese eingeführt ist, und zwar von der den umzulegenden Buchsenrand 5.3 aufweisenden Seite dieser Buchse her. Mit einem Gegenwerkzeug 19 sind das Bauteil 1 und die Gelenkbuchse 5 an dem flanschförmigen Buchsenabschnitt 5.2 abgestützt. Das matrizenartige Gegenwerkzeug 19 bildet dabei eine Öffnung 20 zur Aufnahme des Abschnittes 18.2. Die Öffnung 20 weist an ihrem dem Bauteil 1 zugewandten Öffnungsrand eine Erweiterung 21 auf, und zwar zur Aufnahme des Buchsenabschnittes 5.2. Mit dem Kalibrier- und Umlegstößel 18 erfolgt auch ein zunächst teilweises Umlegen des Buchsenrandes 5.3. Hierfür ist der Kalibrier- und Umlegstößel 18 am Abschnitt 18.2 mit einem kegelförmig sich verjüngenden Teilabschnitt 18.2.1 versehen, an den sich in Richtung zum freien Ende des Kalibrier- und Umlegstößels 18 zunächst ein im Durchmesser reduzierter, taillierter Teilabschnitt 18.2.2, daran anschließend der zur Kalibrierung des Innendurchmessers der Gleit- oder Lagerbuchse 5 dienende Teilabschnitt 18.2.3 mit kreiszylinderförmiger Außenfläche und daran anschließend der das freie Ende des Kalibrier- und Umlegstößels 18 bildende, sich kegelstumpfförmig verjüngende Teilabschnitt 18.2.4 anschließen. Sämtliche Teilabschnitte sind an ihrer Umfangsfläche rotationssymmetrisch ausgebildet und zwar achsgleich mit der Längsachse L_{St18} des Kalibrier- und Umlegstößels 18.

Das vollständige Umlegen des Buchsenrandes 5.3 erfolgt entsprechend der Position b) der Figur 10 mit einem Umlegstößel 22, der u.a. einen Stößelabschnitt 22.1 mit großem Außendurchmesser und einen das Stößelende bildenden, im Außendurchmesser reduzierten Abschnitt 22.2 aufweiset, welcher ähnlich dem Abschnitt 18.2 geformt ist, und zwar ausgehend von dem Stößelabschnitt 22.1 zum freien Ende des Umlegstößels 22 mit einem eingeschnürten bzw. taillierten Teilabschnitt 22.2.1, mit einem eine kreiszylinderförmige Außenfläche aufweisenden Teilabschnitt 22.2.2 und mit einem das freie Ende des Umlegstößels 22 bildenden und sich zu diesem Ende hin kegelstumpfförmig verjüngenden Teilabschnitt 22.2.3. Zwischen dem Abschnitt 22.1 und dem Abschnitt 22.2 ist eine ringförmige Fläche 23 gebildet, die in einer Ebene senkrecht zur Stößellängsachse L_{St22} liegt und mit der beim Einführen des Stößelabschnitts 22.2 in die Gleitlager- oder Gelenkbuchse 5 der Buchsenrand 5.3 vollständig umgelegt wird.

Auch bei diesem Verfahrensschritt sind das Bauteil 1 und die Gleit- oder Lagerbuchse 5 wiederum am Gegenwerkzeug 19 abgestützt. In einem weiteren Verfahrensschritt wird entsprechend der Position c) der Figur 10 in die im Bauteil 1 gesicherte Gleitlager- oder Gelenkbuchse 5 der Gelenkbolzen 6 eingesetzt, sodass dessen Bolzenabschnitt 6.2 in der Buchse 5 aufgenommen ist. Der Gelenkbolzen 6 ist dabei in der im Zusammenhang mit der Figur 3 beschriebenen ringförmigen Vorsprung 8.1 versehen. Der axiale Abstand, den der freie Rand des Vorsprungs 8.1 von der Ebene der den Bolzenabschnitten 6.2 und 6.3 zugewandten Seite 6.1.1 des Bolzenkopfes aufweist ist unter Berücksichtigung der Bauteiltoleranzen, d.h. insbesondere unter Berücksichtigung der Toleranzen der Dicke des Bauteils 1, der Dicke bzw. Materialstärke der Gleitlager- oder Gelenkbuchsen 5 sowie der axialen Länge des Bolzenabschnittes 6.2 mit dem Vorsprung 8.1 derart gewählt, dass dieser Vorsprung mit seinem freien Rand nach dem Einsetzen des Gelenkbolzens 6 geringfügig über die Ebene der dem Bauteil 1 abgewandten Seite des Buchsenabschnittes 5.2 vorsteht, wie dies mit dem Maß X in der Position c) angedeutet ist.

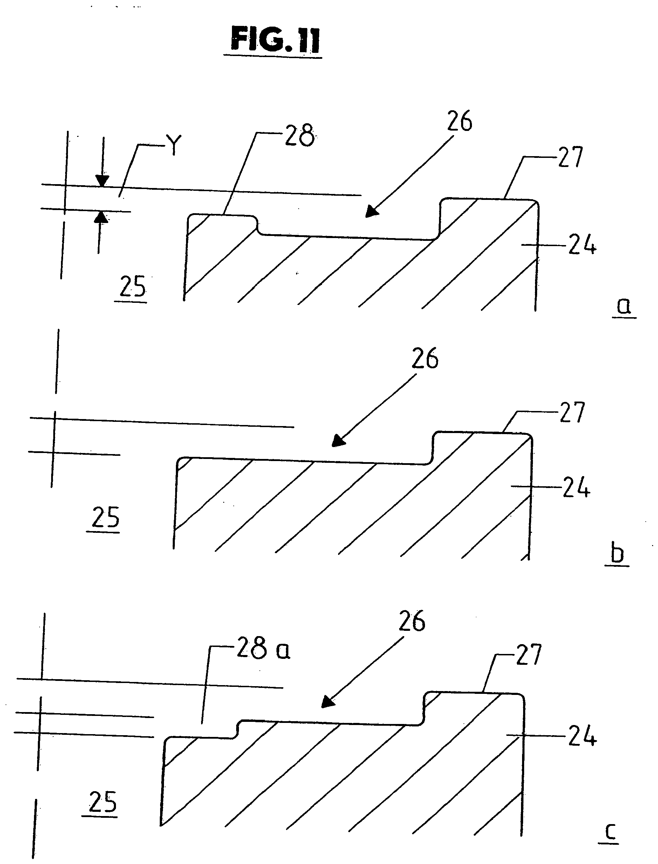

Das Sichern des Gelenkbolzens 6 in der Gleitlager- oder Gelenkbuchse 5 erfolgt durch Verstemmen bzw. durch plastisches teilweises Verformen des Vorsprunges 8.1 in der in der Position d) der Figur 10 dargestellten Weise. Hierfür wird ein Werkzeug verwendet, welches aus dem Stempel 23, der gegen den Bolzenkopf 6.1 bzw. gegen die den Bolzenabschnitten 6.2 und 6.3 abgewandte Kopfoberseite 6.1.2 anliegt, sowie aus dem matrizenartigen Gegenwerkzeug 24 besteht. Das Gegenwerkzeug 24 bildet eine Öffnung 25 zur Aufnahme des Bolzenabschnittes 6.3. Die Öffnung 25 ist an der dem Bauteil 1 zugewandten Seite, d.h. an der Anlage- oder Abstützfläche 27 des Gegenwerkzeugs 24 mit einer Erweiterung 26 versehen, und zwar derart, dass in dieser Erweiterung der Buchsenabschnitt 5.2 aufgenommen ist und so beim Verstemmen des Vorsprunges 8.1 keine oder im Wesentlichen keine Kräfte auf diesen Buchsenabschnitt ausgeübt werden, dennoch das angestrebte Verstemmen bzw. plastische Verformen des Vorsprungs 8.1 erfolgt. Hierfür ist die Erweiterung 26 an ihrem Boden mit einer die Öffnung 25 umschließenden ringförmigen Erhebung 28 versehen, die bei der dargestellten Ausführungsform etwas gegenüber der Ebene der Anlagefläche 27 zurückversetzt ist, d.h. über die Ebene der Anlagefläche 27 nicht vorsteht, sondern von dieser Ebene um das in der Figur 10, Position d) und in der Figur 11 in der Position a) jeweils mit Y bezeichnete Maß beabstandet ist. Mit dem aus dem Stößel 23 und dem Gegenwerkzeug 24 bestehenden Werkzeug wird der Vorsprung 8.1 so verstemmt, dass der ringförmige Sicherungsabschnitt 8 gegenüber der Ebene der dem Bauteil 1 abgewandten Unterseite des Buchsenabschnittes 5.2 beabstandet ist, d.h. gegenüber dieser Ebene in Richtung zum Bolzenkopf 6.1 hin versetzt ist. Dies wird wiederum dadurch möglich, dass die Öffnung 4 mit dem abgeschrägten Bereich bzw. der Fase 4.1 versehen ist.

Wie die Figur 11 zeigt, besteht durch entsprechende Ausbildung des Gegenwerkzeugs 24 im Bereich der die Öffnung 25 umschließenden Erweiterung 26 die Möglichkeit, das Verstemmen so vorzunehmen, dass die dem Bolzenkopf 6.1 abgewandte Fläche des ringförmigen Sicherungsabschnittes 8 in einer gemeinsamen Ebene mit der dem Bauteil 1 abgewandten Unterseite des Buchsenabschnittes 5.2 liegt, wofür das Gegenwerkzeug im Bereich der Erweiterung 26 den ringartigen Vorsprung 28 nicht aufweist (Figur 11, Position b), oder aber über diese Ebene vorsteht, wofür das Gegenwerkzeug 24 im Bereich der Erweiterung 26 anstelle des Vorsprungs 28 eine die Öffnung 25 umschließende ringartige Vertiefung 28a besitzt (Figur 11, Position c)).

In jedem Fall ist aber die den Vorsprung 8.1 einschließende axiale Länge des Bolzenabschnittes 6.2 so gewählt, dass sie wenigstens gleich der Summe der Materialstärke des Bauteils 1, der doppelten Materialstärke der Leitlager- oder Gelenkbuchse 5 zuzüglich der Toleranzen des Bauteils 1 und der doppelten Wanddicke der Gleitlager- oder Gelenkbuchse 5 ist.

Da das Verstemmen nur im Bereich des Vorsprungs 8.1 erfolgen soll, ist es für die Sicherung des Gelenkbolzens 6 weiterhin ausreichend, wenn die Höhe H bzw. axiale Abmessung des Vorsprunges 8.1 mindestens gleich der Summe der Toleranzen der Dicke des Bauteils 1 sowie der doppelten Toleranz der Wanddicke der Gleitlager-oder Gelenkbuchse 5 ist, wobei in solchen Fällen in denen der durch das Verstemmen erzeugte Sicherungsabschnitt 8 zurückstehend ausgeführt ist, d.h. gegenüber der Ebene der dem Bauteil 1 abgewandten Seite des Buchsenabschnittes 5.2 zurückgesetzt ist, noch über dieses zurückstehende Maß reduziert sein kann, während dem Fall, dass der durch Verstemmen erzeugte Sicherungsabschnitt 8 über den Buchsenabschnitt 5.2 vorsteht, die Höhe H des Vorsprungs 8.1 noch um dieses überstehende Maß vergrößert ist.

Der Vorsprung 8.1 ist weiterhin in jedem Fall so ausgebildet, dass das Volumen des Überstandes X (Position C der Figur 10) nicht größer oder nicht wesentlich größer ist als der Freiraum, der für das Verstemmen des Vorsprunges 8.1 zur Verfügung steht, d.h. im Wesentlichen von der Fase 4.1 gebildet ist.

Wie insbesondere der Vergleich der Positionen c) und d) zeigt, erfolgt das Verstemmen des Vorsprunges 8.1 in jedem Fall aber so, dass dieser Vorsprung nicht auf seiner gesamten Höhe H verformt wird, sondern lediglich auf einem geringen Teil seiner Höhe, beispielsweise auf maximal 20 % seiner Höhe H im Bereich des freien Randes.

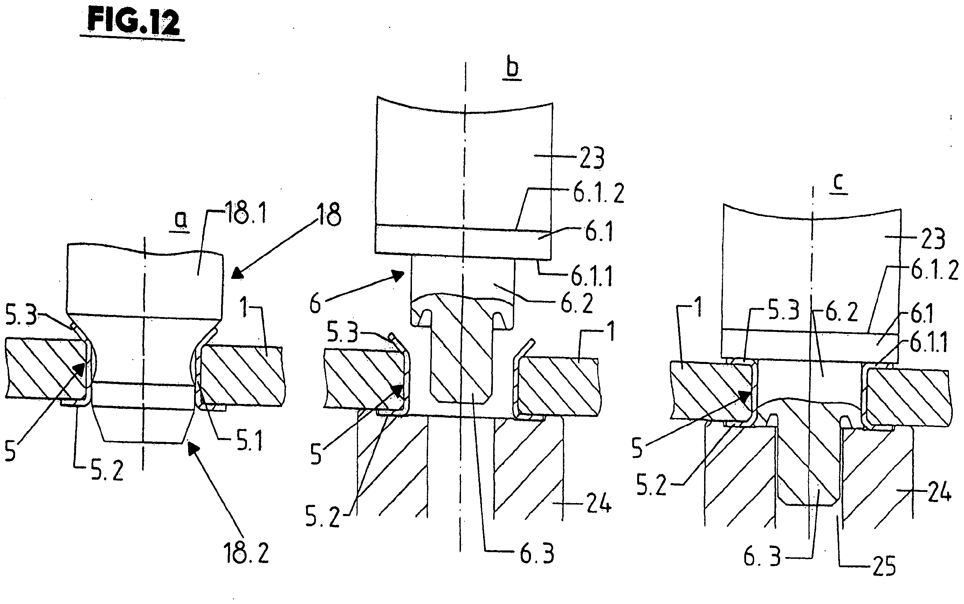

Die Figur 12 zeigt in den Positionen a) und b) ein gegenüber der Figur 10 vereinfachtes Verfahren zum Fixieren der Gleit- oder Lagerbuchse sowie zum Setzen und Sichern des Gelenkbolzens 6. Die Position a) der Figur 12 entspricht der Position a) der Figur 10, d.h. in dieser Position ist wiederum das Kalibrieren der Gleitlager- und Gelenkbuchse 5 sowie das teilweise Umlegen des Buchsenrandes 5.3 mit dem Kalibrier- und Umlegstößel 18 dargestellt.

In der Position b) sind das aus dem Stößel 23 und dem Gegenwerkzeug 24 bestehende Werkzeug zusammen mit dem Bauteil 1, der vorläufig in diesem Bauteil fixierten Gleitlager- oder Gelenkbuchse 5 und dem Gelenkbolzen 6 dargestellt. Das Umlegen des Buchsenrandes 5.3 erfolgt bei diesem Verfahren nicht durch ein gesondertes Werkzeug, d.h. nicht durch den Umlegestempel 22, sondern durch den am Stößel 23 in geeigneter Weise, beispielsweise durch Permanentmagnete, Unterdruck usw. gehaltenen Gelenkbolzen 6, der beim Einführen seines Bolzenabschnittes 23 in die Öffnung 25 des Gegenwerkzeugs 24 und beim anschließenden Verstemmen des Vorsprungs 8.1 mit dem Bolzenkopf 6.1 bzw. mit der Bolzenkopfseite 6.1.1 auch das vollständige Umlegen des Buchsenrandes 5.3 bewirkt, sodass dann wiederum der in der Position c) der Figur 11 dargestellte Zustand erreicht ist.

Das Einbringen und Fixieren der Gleitlager- oder Gelenkbuchse 5 sowie das Setzen und Sichern des Gelenkbolzens 6 erfolgt auch bei dieser Ausführungsform wiederum unter bzw. in der Presse und dabei in einem Fertigungswerkzeug, beispielsweise Folge- oder Stufenwerkzeug, welches auch zur Herstellung zumindest des Bauteils 1 beispielsweise durch Stanzen und Biegen dient. Wie vorstehend beschrieben, sind zumindest die zum Einsetzen, Kalibrieren und Fixieren der Gleitlager- und Gelenkbuchsen 5 dienenden Werkzeuge wiederum beweglich, d.h. insbesondere schwimmend oder gefedert gelagert, sodass sich für diese Werkzeuge anstelle der weggesteuerten Bewegung der Presse eine Kraft gesteuerte Bewegung ergibt.

Die im Zusammenhang mit den Figuren 10 - 12 beschriebenen Verfahren können in bevorzugter Weise auch mit dem in der Figur 9 beschriebenen Verfahren zur Kalibrierung der Materialdicke des Bauteils 1 kombiniert werden, d.h. vor dem Setzen der jeweiligen Gleitlager- oder Gelenkbuchse erfolgt durch plastische Verformung diese Bauteildickenkalibrierung, sodass insbesondere auch beim Verstemmen der Gelenkbolzen keine durch Toleranzen bedingte Verformung der Materialdicke des Buchsenrandes 5.3 selbst bei ungefederten Verstemmwerkzeugen (Stempel 23 und Gegenwerkzeug 24) erfolgt.
Vorstehend wurde davon ausgegangen, dass die Gelenkbolzen 6 zu ihrer Sicherung einen ringartigen Vorsprung 8.1 aufweisen. Es besteht selbstverständlich auch die Möglichkeit, anstelle eines ringartigen Vorsprungs eine anders geformten Vorsprung oder auch mehrere z.B. um die Achse des Gelenkbolzens 6 verteilte Vorsprünge vorzusehen.

### Bezugszeichenliste

- 1, 2: Bauteil bzw. Werkstück
- 3: Gelenk
- 4: Öffnung
- 4.1: Fase
- 5: Gleitlager- oder Gelenkbuchse
- 5.1: hülsenartiger Buchsenabschnitt
- 5.2: flanschförmiger Buchsenabschnitt
- 5.3: umgelegter Buchsenrand
- 6: Gelenkbolzen
- 6.1: Kopf
- 6.1.1, 6.1.2: Kopfseite
- 6.2 , 6.3: Bolzenabschnitt
- 7: Öffnung im Bauteil bzw. Werkstück 2
- 8: durch Verstemmen erzeugter Sicherungsabschnitt
- 8.1: Vorsprung
- 8.2: Nut
- 9: Materialsteg zwischen den Bauteilen 1
- 10: Buchsensetzkopf
- 11: starre Führung
- 12: Versorgungsschlauch
- 13: Bereitstellungsposition
- 14: Plunger
- 15: Kalibrier- und Umlegwerkzeug
- 16: Kalibrier- und Umlegstößel
- 17: Betätigungselement, beispielsweise pneumatisch oder hydraulisch betätigt
- 18: Kalibrier- und Umlegstößel
- 18.1, 18.2: Stößelabschnitt
- 18.2.1 - 18.2.3: Teilabschnitt
- 19: Gegenwerkzeug
- 20: Öffnung des Gegenwerkzeugs 19
- 21: Erweiterung der Öffnung 20
- 22: Umlegstößel
- 22.1, 22.2: Stößelabschnitt
- 22.2.1 - 22.2.3: Teilabschnitt
- 23: Stempel
- 24: Gegenwerkzeug
- 25: Öffnung des Gegenwerkzeugs 24
- 26: Erweiterung der Öffnung 25
- 27: Anlagefläche für Bauteil 1
- 28: ringförmige Erhebung zum Verstemmen des Vorsprungs 8.1
- 28a: ringförmige Vertiefung

- A: Bewegungsrichtung der Bauteile 1 im Folgewerkzeug
- B: Förderrichtung der Buchsen 5 an den Buchsensetzkopf
- C: Bewegung jeder Buchse 5 aus der starren Führung 11 in die Bereitstellungsposition 13
- L_{St18}, L_{St22}: Stößellängsachse
- X, Y: Maß bzw. Überstand
- FW: Folgewerkzeug
- W1, W2, W3: Werkzeugteil des Folgewerkzeugs
- D: kalibrierte Bauteildicke
- D': nicht kalibrierte Bauteildicke

## Patentansprüche

1. Verfahren zum Herstellen eines Gelenks oder einer Gelenkverbindung (3), bei dem (Verfahren) in wenigstens einer Öffnung (4) eines Bauteils (1) eine Gleitlager- oder Gelenkbuchse (5) mit einem Gelenkbolzen (6) vorgesehen wird, an dessen aus der Gelenkbuchse (5) vorstehenden Bolzenende (6.3) ein weiteres Bauteil (2) befestigbar ist, wobei der Gelenkbolzen (6) an einen Bolzenkopf (6.1) anschließend einen ersten Bolzenabschnitt (6.2) mit größerem Durchmesser und daran anschließend wenigstens einen weiteren Bolzenabschnitt (6.3) mit reduziertem Durchmesser aufweist, wobei der erste Bolzenabschnitt (6.2) in der jeweiligen Gelenkbuchse (5) aufgenommen ist und wobei der jeweilige Gelenkbolzen (6) nach dem Einbringen in die Gelenkbuchse (5) in der Gelenkbuchse (5) oder in dem einen Bauteil (1) gesichert wird, **dadurch gekennzeichnet, dass** das Sichern durch plastisches Verformen oder durch Verstemmen eines Abschnittes des Gelenkbolzens (6) im Bereich des Übergangs zwischen dem ersten und dem weiteren Bolzenabschnitt erfolgt.

2. Verfahren nach Anspruch 1, **dadurch gekennzeichnet, dass** das Verstemmen des Gelenkbolzens (6) derart erfolgt, dass zumindest ein radial über den Umfang des Gelenkbolzens (6) wegstehender und die Bolzenachse ringförmig umschließender Abschnitt (8) gebildet ist.

3. Verfahren nach Anspruch 2, **dadurch gekennzeichnet, dass** das Verstemmen des Gelenkbolzens (6) derart erfolgt, dass der radial über den Umfang des Gelenkbolzens wegstehende Abschnitt (8) in einem von einer Erweiterung oder einer Fase (4.1) der Öffnung (4) gebildeten Freiraum aufgenommen ist.

4. Verfahren nach Anspruch 2, **dadurch gekennzeichnet, dass** das Verstemmen des Gelenkbolzens (6) derart erfolgt, dass der radial über den Umfang des Gelenkbolzens wegstehende und diesen Gelenkbolzen sichernde Abschnitt (8) sich innerhalb der Gelenkbuchse (5) befindet, oder aber in einer gemeinsamen Ebene mit einem Öffnungsrand der Gelenkbuchse (5) liegt oder über die Gelenkbuchse (5) nach außen vorsteht.

5. Verfahren nach einem der vorhergehenden Ansprüche, **dadurch gekennzeichnet, dass** das Sichern des Gelenkbolzens durch Verformen eines Vorsprungs, vorzugsweise eines ringförmigen Vorsprungs (8.1) im Bereich des Übergangs zwischen dem ersten und dem weiteren Bolzenabschnitt erfolgt, und dass der ringförmige Vorsprung (8.1) durch eine Nut oder Vertiefung (8.2) in einer den Übergang zwischen dem ersten Bolzenabschnitt (6.2) und dem weiteren Bolzenabschnitt (6.3) bildenden Ringfläche geformt ist.

6. Verfahren nach Anspruch 5, **dadurch gekennzeichnet, dass** das Verstemmen des wenigstens einen Vorsprungs (8.1) derart erfolgt, dass dieser nur im Bereich seines freien Endes auf einem Teil seiner Höhe verformt wird, beispielsweise auf maximal 20 % seiner Höhe (H).

7. Verfahren nach einem der vorhergehenden Ansprüche, **dadurch gekennzeichnet, dass** das Verstemmen des Gelenkbolzens kraftgesteuert, beispielsweise unter Verwendung wenigstens eines gefederten Werkzeugs erfolgt.

8. Gelenk oder Gelenkverbindung (3) zwischen wenigstens zwei Bauteilen (1, 2), mit wenigstens einer in einer Öffnung (4) des einen Bauteils (1) angeordneten Gleitlager- oder Gelenkbuchse (5), mit einem in dieser Gelenkbuchse (5) mit einem ersten Bolzenabschnitt (6.2) aufgenommenen und mit einem weiteren Bolzenabschnitt (6.3) aus der Gelenkbuchse (5) vorstehenden und mit einem weiteren Bauteil (2) verbundenen Gelenkbolzen (6),
**dadurch gekennzeichnet, dass** der Gelenkbolzen (6) wenigstens einen durch plastisches Verformen oder Verstemmen erzeugten, radial über den Umfang des wenigstens einen in der Gelenkbuchse (5) aufgenommenen Bolzenabschnitt (6.2) vorstehenden Abschnitt (8) aufweist.

9. Gelenk nach Anspruch 8, **dadurch gekennzeichnet, dass** der durch Verstemmen bzw. plastisches Verformen erzeugte Abschnitt (8) in der Gelenkbuchse (5) aufgenommen ist oder bündig mit einem offenen Ende der Gelenkbuchse (5) liegt oder aus der Gelenkbuchse (5) vorsteht.

10. Gelenk nach Anspruch 8 oder 9, **dadurch gekennzeichnet, dass** der durch plastisches Verformen bzw. durch Verstemmen erzeugte Abschnitt (8) zumindest teilweise in einem durch Erweiterung des Innendurchmessers der Gelenkbuchse und/oder der Öffnung (4) des Bauteils gebildeten Freiraum (4.1) aufgenommen ist, wobei der Freiraum z.B. durch eine Erweiterung oder z.B. durch eine Fase (4.1) der Öffnung (4) des einen Bauteils (1) gebildet ist.

11. Gelenk nach einem der vorhergehenden Ansprüche 8 bis 10, **dadurch gekennzeichnet, dass** der über den Umfang des in der Gelenkbuchse (5) radial wegstehende Abschnitt (8) durch wenigstens einen zumindest teilweise elastisch verformten Vorsprung (8.1) gebildet ist, wobei der Vorsprung im Bereich seines freien Endes nur auf einer Teillänge zu dem über den Umfang des Gelenkbolzenabschnitts radial weg stehenden Abschnitt (8) verformt ist.

12. Gelenkbolzen zur Verwendung bei einem Gelenk oder Gelenkverbindung (3) nach einem der Ansprüche 8 bis 11, mit einem Bolzenkopf (6.1) und einem von diesem weg stehenden Bolzenschaft, der wenigstens zwei Bolzenabschnitte (6.2, 6.3) mit unterschiedlichem Schaftdurchmesser bildet,
**dadurch gekennzeichnet, dass** am Übergang zwischen zwei aneinander anschließenden Bolzenabschnitten (6.2, 6.3) mit unterschiedlichem Durchmesser wenigstens ein Vorsprung (8.1) gebildet ist, der von dem Bolzenabschnitt (6.2) mit dem größeren Durchmesser in Richtung der Bolzenachse wegsteht,
wobei der wenigstens eine Vorsprung (8.1) beispielsweise ein ringförmiger Vorsprung ist und wobei der wenigstens eine Vorsprung (8.1) von einer Vertiefung oder Nut (8.2) an einer den Übergang zwischen den Bolzenabschnitten (6.2, 6.3) bildenden Bolzenfläche geformt ist.

13. Gelenkbolzen nach Anspruch 12, **gekennzeichnet durch** mehrere in wenigstens einer die Bolzenachse ringförmig umschließenden Anordnung angeordnete Vorsprünge.

14. Gelenkbolzen nach Anspruch 12 oder 13, **dadurch gekennzeichnet,**
**dass** der wenigstens eine Vorsprung an einem bezogen auf die Bolzenachse radial außen liegenden Randbereich des Übergangs zwischen den beiden Bolzenabschnitten (6.2, 6.3) vorgesehen ist, wobei die axiale Länge bzw. Höhe (H) des Vorsprungs deutlich kleiner ist als die axiale Länge des diesen Vorsprung tragenden Bolzenabschnitts (6.2).

15. Gelenkbolzen nach einem der vorhergehenden Ansprüche 12 bis 14, **dadurch**
**gekennzeichnet, dass** sich der wenigstens eine Vorsprung (8.1) innerhalb der Kontur der Umfangsfläche des diesen Vorsprung aufweisenden Bolzenabschnitts (6.2) befindet.

16. Gelenkbolzen nach einem der vorhergehenden Ansprüche 12 bis 15, **dadurch**
**gekennzeichnet dass** die axiale Höhe des wenigstens einen Vorsprungs (8.1) etwa gleich der Summentoleranz der Bauteildicke, die das eine Bauteil im Bereich des Gelenks bzw. der Gelenkverbindung (3) aufweist, und der doppelten Wanddicke der zusammen mit dem Gelenkbolzen verwendeten Gelenkbuchse (5) ist.

## Claims

1. A method of manufacturing a joint or a joint connection (3) in which (method) in at least one opening (4) of a component (1) a plain bearing bushing or joint bushing (5) with a joint bolt (6) is provided, on whose bolt end (6.3) projecting from the joint bushing (5) a further component (2) can be attached, wherein the joint bolt (6) comprises, adjacent to a bolt head (6.1), a first bolt section (6.2) with a larger diameter and adjoining this at least one further bolt section (6.3) with a reduced diameter, wherein the first bolt section (6.2) is accommodated in the respective joint bushing (5) and wherein the respective joint bolt (6) after insertion into the joint bushing (5) is secured in the joint bushing (5) or in the one component (1), **characterised in that** the securing takes place through plastic deformation or caulking a section of the joint bolt (6) in the region of the transition between the first and the further bolt section.

2. The method according to claim 1, **characterised in that** caulking of the joint bolt (6) takes place in such a way that at least one section (8) is formed which projects radially over the circumference of the joint bolt (6) and annularly surrounds the bolt axis.

3. The method according to claim 2, **characterised in that** caulking of the joint bolt (6) takes place in such a way that the section (8) projecting radially over the circumference of the joint bolt is accommodated in a free space formed by a widening or a chamfer (4.1) of the opening (4).

4. The method according to claim 2, **characterised in that** caulking of the joint bolt (6) takes place in such a way that the section (8) projecting radially over the circumference of the joint bolt and securing this joint bolt is located within the joint bushing (5), or lies in a common plane with an opening edge of the joint bushing (5) or projects outwards via the joint bushing (5).

5. The method according to any one of the preceding claims, **characterised in that** securing of the joint bolt takes place through deformation of a projection, preferably an annular projection (8.1) in the area of the transition between the first and further bolt section, and **in that** the annular projection (8.1) is formed by a groove or recess (8.2) in a ring surface forming the transition between the first bolt section (6.2) and the further bolt section (6.3).

6. The method according to claim 5, **characterised in that** caulking of the at least one projection (8.1) takes place in such a way that it is only deformed in a portion of its free end on a portion of its height, for example to maximal 20 % of its height (H).

7. The method according to any one of the preceding claims, **characterised in that** the caulking of the joint bolt takes place in a force-controlled manner, for example using at least one spring-loaded tool.

8. A joint or joint connection (3) between at least two components (1, 2) with at least one plain bearing bushing or joint bushing (5) arranged in an opening (4) of the component (1), with a joint bolt (6) accommodated with a first bolt section (6.2) in said joint bushing (5) and projecting with a further bolt section (6.3) from the joint busing (5) and connected with a further component (2), **characterised in that** the joint bolt (6) has a section (8) which is produced by plastic deformation or caulking and which radially projects over the circumference of the at least one bolt section (6.2) accommodated in the joint bushing (5).

9. The joint according to claim 8, **characterised in that** the section (8) produced by caulking or plastic deformation is accommodated in the joint bushing (5) or is flush with an open end of the joint bushing (5) or protrudes from the joint bushing (5).

10. The joint according to claim 8 or 9, **characterised in that** the section (8) produced by plastic deformation or caulking is at least partially accommodated in a free space (4.1) formed by a widening of the inner diameter of the joint bushing and/or the opening (4) of the component, wherein the free space is, for example, formed by a widening or, for example, a chamfer (4.1) of the opening (4) of the component (1).

11. The joint according to any one of the preceding claims 8 to 10, **characterised in that** the section (8) radially projecting over the circumference of the joint bushing (5) is formed by at least one at least partially elastically deformed projection (8.1), wherein in the area of its free end the projection is only deformed on a partial length to the section (8) radially projecting away over the circumference of the joint bolt section.

12. A joint bolt for use in a joint or joint connection (3) according to any one of claims 8 to 11, with a bolt head (6.1) and a bolt shaft projecting therefrom which forms at least two bolt sections (6.2, 6.3) with different shaft diameter,
**characterised in that** at the transition between two adjoining bolt sections (6.2, 6.3) with different diameters, at least one projection (8.1) is formed which projects from the bolt section (6.2) with the larger diameter in the direction of the bolt axis,
wherein the at least one projection (8.1) is, for example, an annular projection and wherein the at least one projection (8.1) is formed by a recess or groove (8.2) on a bolt surface forming a transition between the bolt sections (6.2, 6.3).

13. The joint bolt according to claim 12, **characterised by** several projections arranged in at least one arrangement annularly encompassing the bolt axis.

14. The joint bolt according to claim 12 or 13, **characterised in that**
the at least one projection is provided on an edge area of the transition between the two bolt sections (6.2, 6.3) lying radially outwards in relation to the bolt axis, wherein the axial length or height (H) of the projection is considerably smaller than the axial length of the bolt section (6.2) bearing this projection.

15. The joint bolt according to any one of the preceding claims 12 to 14, **characterised in that** the at least one projection (8.1) is located within the contour of the circumferential area of the bolt section (6.2) comprising this projection.

16. The joint bolt according to any one of the preceding claims 12 to 15, **characterised in that** the axial height of the at least one projection (8.1) is around equal to the total tolerance of the component thickness that the component has in the area of the joint or the joint connection (3) and the double wall thickness of the joint bushing (5) used together with the joint bolt.

## Revendications

1. Procédé de fabrication d'une articulation ou d'une connexion d'articulation (3), dans lequel (procédé), dans au moins une ouverture (4) d'une pièce (1), il est prévu une douille à palier coulissant ou articulé (5) avec un goujon d'articulation (6) à l'extrémité de goujon (6.3) dépassant de la douille articulée (5) une autre pièce (2) peut être fixée, le goujon d'articulation (6) présentant, consécutivement à une tête de goujon (6.1), une première section de goujon (6.2) de diamètre supérieur et, se raccordant à celle-ci, au moins une autre section de goujon (6.3) à diamètre réduit, la première section de goujon (6.2) étant reçue dans la douille articulée respective (5) et le goujon d'articulation respectif (6) étant, après introduction dans la douille articulée (5), bloqué dans la douille articulée (5) ou dans la pièce (1), **caractérisé en ce que** le blocage est effectué par déformation plastique ou par matage d'une section du goujon d'articulation (6) au niveau de la transition entre la première section de goujon et l'autre.

2. Procédé selon la revendication 1, **caractérisé en ce que** le matage du goujon d'articulation (6) a lieu de manière à ce qu'au moins une section (8) éloignée radialement de la circonférence du goujon d'articulation (6) et entourant le goujon d'articulation en forme d'anneau soit formée.

3. Procédé selon la revendication 2, **caractérisé en ce que** le matage du goujon d'articulation (6) a lieu de manière à ce que la section (8) éloignée radialement de la circonférence du goujon d'articulation soit reçue dans un espace libre constitué par une extension ou un chanfrein (4.1) de l'ouverture (4).

4. Procédé selon la revendication 2, **caractérisé en ce que** le matage du goujon d'articulation (6) a lieu de manière à ce que la section (8) éloignée radialement de la circonférence du goujon d'articulation et bloquant ce goujon d'articulation se trouve à l'intérieur de la douille articulée (5) ou dans un plan commun avec un bord d'ouverture de la douille articulée (5) ou dépasse vers l'extérieur de la douille articulée (5).

5. Procédé selon une des revendications précédentes, **caractérisé en ce que** le blocage du goujon d'articulation est réalisé par déformation d'une saillie, de préférence une saillie de forme annulaire (8.1) au niveau de la transition entre la première et l'autre section de goujon et que la saillie de forme annulaire (8.1) est formée par une rainure ou un creux (8.2) pratiqué dans une surface annulaire constituant la transition entre la première section de goujon (6.2) et l'autre section de goujon (6.3).

6. Procédé selon la revendication 5, **caractérisé en ce que** le matage du goujon d'articulation a lieu de manière à ce que le matage de l'au moins une saillie (8.1) a lieu de manière à ce que celle-ci ne soit déformée qu'au niveau de son extrémité libre sur une partie de sa hauteur, par exemple sur 20 % au maximum de sa hauteur (H).

7. Procédé selon une des revendications précédentes, **caractérisé en ce que** le matage du goujon d'articulation a lieu sous contrôle de force, par exemple en utilisant au moins un outil à ressort.

8. Articulation ou connexion d'articulation (3) entre au moins deux pièces (1, 2) comportant au moins une douille à palier coulissant ou articulé (5) disposée dans une ouverture (4) de la pièce (1) avec un goujon d'articulation (6) reçu dans cette douille articulée (5) par une première section de goujon (6.2) et dépassant de la douille articulée (5) par une autre section de goujon (6.3) et raccordée à une autre pièce (2), **caractérisée en ce que** le goujon d'articulation (6) présente au moins une section (8) créée par déformation plastique ou matage dépassant radialement de la circonférence de l'au moins un une section de goujon (6.2) reçue dans la douille articulée (5).

9. Articulation selon la revendication 8, **caractérisée en ce que** la section (8) créée par matage ou déformation plastique est reçue dans la douille articulée (5) ou est à fleur avec une extrémité ouverte de la douille articulée (5) ou dépasse de la douille articulée (5).

10. Articulation selon la revendication 8 ou 9, **caractérisée en ce que** la section (8) créée par matage ou déformation plastique est reçue au moins partiellement dans un espace libre (4.1) constitué par extension du diamètre intérieur de la douille articulée et/ou l'ouverture (4) de la pièce, l'espace libre étant constitué par exemple par une extension ou par exemple par un chanfrein (4.1) de l'ouverture (4) de la pièce (1).

11. Articulation selon une des revendications 8 à 10 précédentes, **caractérisée en ce que** la section (8) éloignée radialement de la circonférence dans la douille articulée (5) est constituée par au moins une saillie (8.1) déformée élastiquement au moins partiellement, la saillie étant déformée au niveau de son extrémité libre seulement sur une partie de sa longueur pour former la section (8) éloignée radialement au-delà de la circonférence de la section de goujon d'articulation.

12. Goujon d'articulation destiné à être utilisé dans une articulation ou connexion articulée (3) selon une des revendications 8 à 11, comportant une tête de goujon (6.1) et un arbre de goujon éloigné de celle-ci et qui constitue au moins deux sections de goujon (6.2, 6.3) à diamètre d'arbre différent,
**caractérisé en ce que**, à la transition entre deux sections de goujon (6.2, 6.3) se raccordant, est formée au moins une saillie (8.1) qui est éloignée de la section de goujon (6.2) de diamètre supérieur en direction de l'axe du goujon,
l'au moins une saillie (8.1) étant par exemple une saillie de forme annulaire et l'au moins une saillie (8.1) étant formée par un creux ou une rainure (8.2) au niveau d'une surface de goujon formant la transition entre les sections de goujon (6.2, 6.3).

13. Goujon d'articulation selon la revendication 12, **caractérisé par** plusieurs saillies disposées en au moins une disposition entourant l'axe de goujon en forme annulaire.

14. Goujon d'articulation selon la revendication 12 ou 13, **caractérisé en ce que** l'au moins une saillie est prévue au niveau d'une zone périphérique située radialement à l'extérieur par rapport à l'axe du goujon de la transition entre les deux sections de goujon (6.2, 6.3), la longueur ou hauteur (H) axiale de la saillie étant nettement inférieur à la longueur axiale de la section de goujon (6.2) supportant cette saillie.

15. Goujon d'articulation selon une des revendications 12 à 14 précédentes, **caractérisé en ce que** l'au moins une saillie (8.1) se trouve à l'intérieur du contour de la surface circonférentielle de la section de goujon (6.2) présentant cette saillie.

16. Goujon d'articulation selon une des revendications 12 à 15 précédentes, **caractérisé en ce que** la hauteur axiale de l'au moins une saillie (8.1) est approximativement égale à la tolérance totale de l'épaisseur de la pièce qui présente la pièce au niveau de l'articulation ou de la connexion articulée (3) et le double de l'épaisseur de paroi de la douille articulée (5) utilisée avec le goujon d'articulation.
